# EUROPÄISCHE PATENTSCHRIFT

(11) **EP 1 780 005 B1**
(45) Veröffentlichungstag und Bekanntmachung des Hinweises auf die Patenterteilung: **11.03.2009**
(21) Anmeldenummer: 05405587.6
(22) Anmeldetag: 18.10.2005
(51) Int. Cl.: B32B 15/08, B32B 27/28

(54) **Kaltverformbares Laminat für Blisterbodenteile**
Coldformable laminate for blister bottom sheet
Laminé déformable à froid pour feuille de base pour blister

(43) Veröffentlichungstag der Anmeldung: 02.05.2007
(73) Patentinhaber: Alcan Technology & Management Ltd., 8212 Neuhausen am Rheinfall (CH)
(72) Erfinder: Pasbrig, Erwin, 78224 Singen (DE)

(56) Entgegenhaltungen:
- EP-A- 1 488 921
- WO-A-20/04091905

## Beschreibung

Die Erfindung betrifft ein kaltverformbares Laminat nach dem Oberbegriff des Anspruchs 1.

Kaltverformbare Laminate aus einer beidseitig mit Kunststoff kaschierten Aluminiumfolie werden unter anderem zur Herstellung von Bodenteilen von Blisterverpackungen für Arzneimittel verwendet. In die Bodenteile sind Näpfe zur Aufnahme einzelner Tabletten oder anderer Formen von Einzeldosen geformt. Die Aluminiumfolie dient hier primär als Barriereschicht gegen den Durchtritt von Wasserdampf und Gasen und schützt die Produkte vor allem vor einer Aufnahme oder Abgabe von Feuchtigkeit.

Herkömmliche Laminate zur Herstellung von Bodenteilen von Bllsterverpackungen für Arzneimittel haben häufig den Aufbau oPA / Aluminiumfolie / Siegelschicht. Gebräuchliche Siegelschichten bestehen aus 15 bis 100 µm PVC, 20 - 60 µm PP oder 30 - 50 µm PE. Nach Füllung der Näpfe wird eine gegebenenfalls peelbare Deckfolie gegen das Bodenteil gesiegelt. Herkömmliche Deckfolien sind gegebenenfalls mit Kunststoff beschichtete, mit Folie kaschierte oder lackierte Aluminiumfolien. Bei diesen Blisterverpackungen sind die Produkte zwischen zwei als Barriere gegen den Durchtritt von Wasserdampf und Gasen angeordneten Aluminiumfollen von beiden Seiten gegen Umwelteinflüsse geschützt.

Eine Blisterverpackung hat jedoch ungeschützte Stellen. Nach dem Ausstanzen liegen die Schnittkanten und bei Perforation die Perforationsschnitte frei. Die Siegelschicht ist an diesen Stellen nicht mehr durch die Barriereschicht aus Aluminium geschützt. Über die Zeit diffundiert Feuchtigkeit durch Querdiffusion durch den Kunststoff in die Näpfe und verkürzt dadurch die Haltbarkeit des Füllgutes.

Es werden immer mehr Wirkstoffe für Medikamente und Chemikalien für Diagnostikanwendungen entwickelt, welche eine sehr hohe Empfindlichkeit gegen-Ober Feuchtigkeit aufweisen. Für derartige Produkte wären Blisterverpackungen mit verminderter Querdiffusion wünschenswert.

Aus WO-A-2004/000541 und WO-A-2004/080808 sind mehrschichtige Filme mit einer Barriereschicht und mit einer Feuchtigkeit absorbierendes Material enthaltenden Slegelschicht bekannt. Die Filme dienen zur Verpackung feuchteempfindlicher Gegenstände, wie z.B. Diagnostik-Teststreifen, und werden entweder nach Faltung gegen sich selbst oder gegen einen zweiten Film heissgesiegelt. Als Feuchtigkeit absorbierendes Material mit starker Wasserbindung wird bevorzugt Kalziumoxid (CaO) eingesetzt.

EP-A-1 488 921 offenbart ein kaltverformbares Laminat für Blister-bodenteile bestehend aus biaxial orientiertem Polyamid 25 µm, extrusionsbeschichtetem PE oder PP 20µm, Aluminium 45µm und PCTFE (ACLAR^{®}) 23µm.

Der Erfindung liegt die Aufgabe zugrunde, ein zur Herstellung von Bodenteilen von Blisterverpackungen für gegen Feuchtigkeit empfindliche Produkte geeignetes kaltverformbares Laminat der eingangs genannten Art zu schaffen, welches gegenüber herkömmlichen Laminaten nach dem Stand der Technik auch ohne Beimischung von Feuchtigkeit absorbierenden Materialien zur Slegelschicht eine höhere Schutzwirkung gegen den Durchtritt von Feuchtigkeit bei Querdiffusion aufweisen.

Zur erfindungsgemässen Lösung der Aufgabe führt ein kaltverformbares Laminat mit den Merkmalen des Anspruchs 1.

Bei einem erfindungsgemässen Laminataufbau mit der Schichtfolge Aussenschicht / Zwischenschicht / Aluminiumfolie / Zwischenschicht / Siegelschicht ist sowohl zwischen der Aussenschicht und der Aluminiumfolie als auch zwischen der Siegelschicht und der Aluminiumfolie je eine biaxial gereckte Folle aus Polyamid (oPA) als Zwischenschicht angeordnet.

Die Aluminiumfolie liegt im Zustand weich vor und weist bevorzugt eine Dicke von 20 bis 100 µm, insbesondere 30 bis 60 µm, auf.

Die biaxial gereckten Folien aus Polyamid (oPA) weisen bevorzugt eine Dicke von 10 bis 40 µm, Insbesondere 12 bis 40 µm, auf.

Die Folie aus Polychlortrifluorethylen (PCTFE) kann ungereckt oder gereckt sein und weist bevorzugt eine Dicke von 10 bis 120 µm, Insbesondere 12 bis 105 µm, auf.

Die einzelnen Schichten können durch Kaschierung mit lösemittelbasierten, lösemittelfreien oder wässrigen Klebstoffen und/oder durch Extrusionskaschierung verbunden werden. Die Aussenschicht oder die darunter liegende Aluminiumfolie kann bedruckt sein.

Aus dem kaltverformbaren Laminat kann auf bekannte Art ein Blisterbodenteil hergestellt werden. Die Siegelschicht des Laminates bildet dabei die Innenschicht des Blisterbodenteils.

Bei einer Blisterverpackung für gegen Feuchtigkeit empfindliche Produkte, insbesondere für pharmazeutische Produkte wie feuchteempfindliche Tabletten und Pulver, ist in bekannter Art eine gegebenenfalls mit Kunststoff und/oder mit anderen Materialien beschichtete, mit Folie kaschierte oder lackierte Aluminiumfolie gegen die PCTFE-Schicht des Blisterbodenteils gesiegelt

In den Tabellen 2 und 4 sind für die erfindungsgemässen Laminataufbauten bevorzugte Folienkombinationen zusammengestellt. Die Kurzbezeichnungen der den Folien zugrunde liegenden Kunststoffe bedeuten:

| | | | |
|---|---|---|---|
| oPA | orientiertes Polyamid | PET | Polyethylenterephthalat |
| oPP | orientiertes Polypropylen | PCTFE | Polychlortrifluorethylen |

**Tabelle 1: Erster Laminataufbau (nicht erfindungsgemäss)**

| **Nr.** | **Aussenschicht** | **Al** | **Siegelschicht** |
|---|---|---|---|
| 1 | 25 µm oPA | 45 µm | 15 µm PCTFE |
| 2 | 25 µm oPA | 60 µm | 16 µm PCTFE |
| 3 | 25 µm oPA | 45 µm | 23 µm PCTFE |
| 4 | 25 µm oPA | 60 µm | 23 µm PCTFE |
| 5 | 25 µm oPA | 45 µm | 51 µm PCTFE |
| 6 | 26 µm oPA | 60 µm | 51 µm PCTFE |
| 7 | 25 µm oPA | 45 µm | 76 µm PCTFE |
| 8 | 25 µm oPA | 60 µm | 76 µm PCTFE |
| 9 | 25 µm oPA | 45 µm | 102 µm PCTFE |
| 10 | 25 µm oPA | 60 µm | 102 µm PCTFE |
| 11 | 23 µm PET | 45 µm | 15 µm PCTFE |
| 12 | 23 µm PET | 60 µm | 23 µm PCTFE |
| 13 | 23 µm PET | 45 µm | 51 µm PCTFE |
| 14 | 20 µm oPP | 60 µm | 15 µm PCTFE |
| 15 | 20 µm oPP | 45 µm | 23 µm PCTFE |
| 16 | 20 µm oPP | 60 µm | 51 µm PCTFE |

**Tabelle 2: Zweiter Laminataufbau (Nr. 17-26 erfindungsgemäss)**

| **Nr.** | **Aussenschicht** | **Al** | **Zwischenschicht** | **Slegelschicht** |
|---|---|---|---|---|
| 17 | 25 µm oPA | 45 µm | 25 µm oPA | 16 µm PCTFE |
| 18 | 25 µm oPA | 60 µm | 25 µm oPA | 15 µm PCTFE |
| 19 | 25 µm oPA | 45 µm | 25 µm oPA | 23 µm PCTFE |
| 20 | 25 µm oPA | 60 µm | 25 µm oPA | 23 µm PCTFE |
| 21 | 25 µm oPA | 45 µm | 25 µm oPA | 51 µm PCTFE |
| 22 | 25 µm oPA | 60 µm | 25 µm oPA | 51 µm PCTFE |
| 23 | 25 µm oPA | 45 µm | 25 µm oPA | 76 µm PCTFE |
| 24 | 25 µm oPA | 60 µm | 25 µm oPA | 76 µm PCTFE |
| 25 | 25 µm oPA | 45 µm | 15 µm oPA | 102 µm PCTFE |
| 26 | 25 µm oPA | 60 µm | 15 µm oPA | 102 µm PCTFE |
| 27 | 23 µm PET | 60 µm | 23 µm PET | 15 µm PCTFE |
| 28 | 23 µm PET | 60 µm | 23 µm PET | 23 µm PCTFE |
| 29 | 23 µm PET | 60 µm | 23 µm PET | 51 µm PCTFE |
| 30 | 23 µm PET | 45 µm | 23 µm PET | 76 µm PCTFE |
| 31 | 23 µm PET | 60 µm | 23 µm PET | 76 µm PCTFE |
| 32 | 23 µm PET | 45 µm | 23 µm PET | 102 µm PCTFE |
| 33 | 23 µm PET | 60 µm | 23 µm PET | 102 µm PCTFE |
| 34 | 20 µm oPP | 60 µm | 20 µm oPP | 15 µm PCTFE |
| 35 | 20 µm oPP | 60 µm | 20 µm oPP | 23 µm PCTFE |
| 36 | 20 µm oPP | 60 µm | 20 µm oPP | 51 µm PCTFE |
| 37 | 20 µm oPP | 45 µm | 20 µm oPP | 76 µm PCTFE |
| 38 | 20 µm oPP | 60 µm | 20 µm oPP | 76 µm PCTFE |
| 39 | 20 µm oPP | 45 µm | 20 µm oPP | 102 µm PCTFE |
| 40 | 20 µm oPP | 60 µm | 20 µm oPP | 102 µm PCTFE |

**Tabelle 3: Dritter Laminataufbau (nicht erfindungsgemäss)**

| **Nr.** | **Aussenschicht** | **Zwischenschicht** | **Al** | **Slegelschicht** |
|---|---|---|---|---|
| 41 | 20 µm oPA | 20 µm oPA | 45 µm | 15 µm PCTFE |
| 42 | 15 µm oPA | 15 µm oPA | 60 µm | 15 µm PCTFE |
| 43 | 20 µm oPA | 20 µm oPA | 45 µm | 23 µm PCTFE |
| 44 | 15 µm oPA | 15 µm oPA | 60 µm | 23 µm PCTFE |
| 45 | 20 µm oPA | 20 µm oPA | 45 µm | 51 µm PCTFE |
| 46 | 15 µm oPA | 15 µm oPA | 60 µm | 51 µm PCTFE |

**Tabelle 4: Vierter Laminataufbau (erfindungsgemäss)**

| **Nr.** | **Aussenschicht** | **Zwischenschicht** | **Al** | **Zwischenschicht** | **Siegelschicht** |
|---|---|---|---|---|---|
| 47 | 20 µm oPA | 20 µm oPA | 45 µm | 15 µm oPA | 15 µm PCTFE |
| 48 | 15 µm oPA | 15 µm oPA | 60 µm | 15 µm oPA | 15 µm PCTFE |
| 49 | 20 µm oPA | 20 µm oPA | 45 µm | 15 µm oPA | 23 µm PCTFE |
| 50 | 15 µm oPA | 15 µm oPA | 60 µm | 16 µm oPA | 23 µm PCTFE |
| 51 | 20 µm oPA | 20 µm oPA | 45 µm | 15 µm oPA | 51 µm PCTFE |
| 52 | 15 µm oPA | 15 µm oPA | 60 µm | 15 µm oPA | 51 µm PCTFE |

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 den Schichtaufbau eines nicht erfindungsgemässen ersten kaltverformbaren Laminates für die Herstellung von Blisterbodenteilen gemäss Fig. 5, entsprechend der Schnittlinie II-II von Fig. 6;
- Fig. 2 den Schichtaufbau eines erfindungsgemässen zweiten kaltverformbaren Laminates für die Herstellung von Blisterbodenteilen gemäss Fig. 5, entsprechend der Schnittlinie II-II von Fig. 6;
- Fig. 3 den Schichtaufbau eines nicht erfindungsgemässen dritten kaltverformbaren Laminates für die Herstellung von Bllsterbodenteilen gemäss Fig. 5, entsprechend der Schnittlinie II-II von Fig. 6;
- Fig. 4 den Schichtaufbau eines erfindungsgemässen vierten kaltverformbaren Laminates für die Herstellung von Blisterbodenteilen gemäss Fig. 5, entsprechend der Schnittlinie II-II von Fig. 6;
- Fig. 5 die Draufsicht auf einen aus einem der Laminate von Fig. 1 bis 4 kaltgeformten Blisterbodenteilen;
- Fig. 6 den Schnitt durch das Blisterbodenteil von Fig. 5 nach der Linie I-I;
- Fig. 7 das Blisterbodenteil von Fig. 5 mit aufgesiegelter Durchdrückfolle bzw. einer peelbaren Deckfolie.

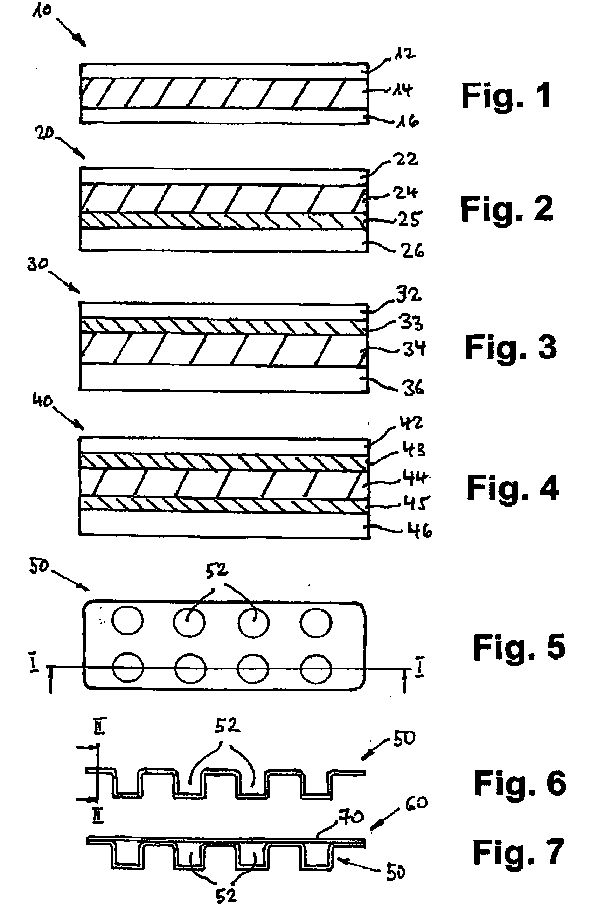

Ein nicht erfindungsgemässes erstes kaltverformbares Laminat 10 für die Herstellung von Bodenteilen für Blisterverpackungen für feuchteempfindliche Produkte weist gemäss Fig. 1 den folgenden Schichtaufbau auf:
- 12: Aussenschicht, z.B. oPA, 25 µm
- 14: Aluminiumfolie, z.B. 60 µm
- 16: Siegelschicht aus PCTFE, z.B. 23 µm

Der oPA-Film 12 bildet die spätere Aussenseite und die Siegelschicht 16 die Innenseite eines aus dem Laminat 10 hergestellten Blisterbodentells.

Ein erfindungsgemässes zweites kaltverformbares Laminat 20 für die Herstellung von Bodenteilen für Blisterverpackungen für feuchteempfindliche Produkte weist gemäss Fig. 2 den folgenden Schichtaufbau auf:
- 22: Aussenschicht, z.B. oPA, 25 µm
- 24: Aluminiumfolie, z.B. 45 µm
- 25: Zwischenschicht, z.B. oPA, 25 µm
- 26: Siegelschicht aus PCTFE, z.B. 76 µm

Der PET-Film 22 bildet die spätere Aussenseite und die Siegelschicht 26 die Innenseite eines aus dem Laminat 20 hergestellten Blisterbodenteils.

Ein nicht erfindungsgemässes dritttes kaltverformbares Laminat 30 für die Herstellung von Bodenteilen für Blisterverpackungen für feuchteempfindliche Produkte weist gemäss Fig. 3 den folgenden Schichtaufbau auf:
- 32: Aussenschicht, z.B. oPA, 20 µm
- 33: Zwischenschicht, z.B. oPA, 20 µm
- 34: Aluminiumfolie, z.B. 45 µm
- 36: Siegelschicht aus PCTFE, z.B. 15 µm

Der oPA-Film 32 bildet die spätere Aussenseite und die Siegelschicht 36 die Innenseite eines aus dem Laminat 30 hergestellten Blisterbodenteils.

Ein erfindungsgemässes viertes kaltverformbares Laminat 40 für die Herstellung von Bodenteilen für Blisterverpackungen für feuchteempfindliche Produkte weist gemäss Fig. 4 den folgenden Schichtaufbau auf:
- 42: Aussenschicht, z.B. oPA, 20 µm
- 43: Zwischenschicht, z.B. oPA, 20 µm
- 44: Aluminiumfolie, z.B. 45 µm
- 45: Zwischenschicht, z.B. oPA, 15 µm
- 46: Siegelschicht aus PCTFE, z.B. 23 µm

Der oPA-Film 42 bildet die spätere Aussenseite und die Siegelschicht 46 die innenseite eines aus dem Laminat 40 hergestellten Blisterbodenteils.

Ein in Fig. 5 gezeigtes Blisterbodenteil 50 wird aus dem Laminat 10, 20, 30, 40 hergestellt, wobei die aus dem Laminat herausgeformten Näpfe 52 zur Aufnahme von beispielsweise Tabletten durch Kaltverformung, wie z.B. durch Tiefziehen mittels Stempel und Matrize, aus dem Laminat herausgeformt sind.

Wie in den Fig. 6 und 7 dargestellt, wird nach dem Befüllen der Näpfe 52 zur Bildung einer Blisterpackung 60 je nach Bedarf eine durchdrückbare oder eine peelbare Deckfolie 70 auf das Boden 50 aufgesiegelt.

Eine als Durchdrückfolie ausgestaltete Deckfolie 70 für ein aus dem Laminat 10, 20, 30, 40 hergestelltes Blisterbodenteil 50 weist beispielsweise den folgenden Schichtaufbau auf: Siegelschicht / Aluminiumfolie / Druckvorlack / Bedruckung / Drucküberlack. Die Bedruckung mit dem Drucküberlack bildet die spätere Aussenseite der Deckfolie 70, die freie Seite der Aluminiumfolie wird gegen die Siegelschicht aus PCTFE eines aus dem Laminat hergestellte Bllsterbodenteils 50 gesiegelt.

Eine als peelbare Folie ausgestaltete Deckfolie 70 für ein aus dem Laminat 10, 20. 30, 40 hergestelltes Blisterbodentell 50 weist beispielsweise den folgenden Schichtaufbau auf: Aluminiumfolie / Klebstoffschicht / Film aus Polyethylenterephthalat (PET) / Klebstoffschicht / Papier / Bedruckung / Drucküberlack. Die Bedruckung mit dem Drucküberlack bildet die spätere Aussenseite der Deckfo-lie 70, die freie Seite der Alumimiumfolie wird gegen die Siegelschicht aus PCTFE eines aus dem Laminat hergestellte Blisterbodenteils 50 gesiegelt.

## Patentansprüche

1. Kaltverformbares Laminat (20, 40) aus einer beidseitig mit Kunststoff kaschierten Aluminiumfolie (24, 44) zur Herstellung von Bodenteilen (50) von Blisterverpackungen (60) für gegen Feuchtigkeit empfindliche Produkte, mit einer auf einer ersten Seite der Aluminiumfolie (24, 44) angeordneten biaxial gereckten Folie aus Polyamid (oPA) als Aussenschicht (22, 42), einer auf der zweiten Seite der Aluminiumfolie (24, 44) angeordneten biaxial gereckte Folie aus Polyamid (oPA) als Zwischenschicht (25, 45) und einer Siegelschicht (26, 46) aus einer Folie aus Polychlortrifluorethylen (PCTFE).

2. Kaltverformbares Laminat (40) nach Anspruch 1, **dadurch gekennzeichnet, dass** zwischen der biaxial gereckten Folie aus Polyamid (oPA) als Aussenschicht (42) und der Aluminiumfolie (44) eine biaxial gereckte Folie aus Polyamid (oPA) als Zwischenschicht (43) angeordnet ist.

3. Kaltverformbares Laminat (20, 40) nach Anspruch 1 oder 2, **dadurch gekennzeichnet, dass** die Aluminiumfolie (24, 44) eine Dicke von 20 bis 100 µm, vorzugsweise 30 bis 60 µm, aufweist.

4. Kaltverformbares Laminat (20, 40) nach Anspruch 1 oder 2, **dadurch gekennzeichnet, dass** die biaxial gereckten Folien aus Polyamid (oPA) eine Dicke von 10 bis 40 µm, vorzugsweise 12 bis 40 µm, aufweisen.

5. Kaltverformbares Laminat (20, 40) nach einem der Ansprüche 1 bis 4, **dadurch gekennzeichnet, dass** die Folie (26, 46) aus Polychlortrifluorethylen (PCTFE) ungereckt oder gereckt ist und Dicke von 10 bis 120 µm, vorzugsweise 12 bis 105 µm, aufweist.

6. Blisterbodenteil (50), hergestellt aus einem kaltverformbaren Laminat (20, 40) nach einem der Ansprüche 1 bis 5.

7. Blisterverpackung (60) für gegen Feuchtigkeit empfindliche Produkte, mit einem Blisterbodenteil (50) hergestellt aus einem kaltverformbaren Laminat (20, 40) nach einem der Ansprüche 1 bis 5 und einer gegen die die Siegelschicht (26, 46) des Laminates auf das Blisterbodenteil (50) gesiegelten, eine Aluminiumfolie enthaltende Deckfolie (70).

8. Verwendung einer Blisterverpackung (60) nach Anspruch 7 für pharmazeutische Produkte wie feuchteempfindliche Tabletten und Pulver.

## Claims

1. Cold-workable laminate (20, 40) composed of an aluminium foil (24, 44) laminated on both sides with plastic for producing base parts (50) of blister packaging units (60) for products sensitive to moisture, having a biaxially oriented polyamide (oPA) film arranged on a first side of the aluminium foil (24, 44) as an outer layer (22, 42), a biaxially oriented polyamide (oPA) film arranged on the second side of the aluminium foil (24, 44) as an intermediate layer (25, 45) and a sealing layer (26, 46) composed of a polychlorotrifluoroethylene (PTCFE) film.

2. Cold-workable laminate (40) according to claim 1, **characterised in that** between the biaxially oriented polyamide (oPA) film as outer layer (42) and the aluminium foil (44) a biaxially oriented polyamide (oPA) film is arranged as intermediate layer (43).

3. Cold-workable laminate (20, 40) according to claim 1 or 2, **characterised in that** the aluminium foil (24, 44) has a thickness of 20 to 100 µm, preferably 30 to 60 µm.

4. Cold-workable laminate (20, 40) according to claim 1 or 2, **characterised in that** the biaxially oriented polyamide (oPA) films have a thickness of 10 to 40 µm, preferably 12 to 40 µm.

5. Cold-workable laminate (20, 40) according to any of claims 1 to 4, **characterised in that** the polychlorotrifluoroethylene (PTCFE) film (26, 46) is unoriented or oriented and has a thickness of 10 to 120 µm, preferably 12 to 105 µm.

6. Blister base part (50) produced from a cold-workable laminate (20, 40) according to any of claims 1 to 5.

7. Blister pack (60) for products sensitive to moisture having a blister base part (50) produced from a cold-workable laminate (20, 40) according to any of claims 1 to 5 and a covering film (70) containing an aluminium foil sealed onto the blister base part (50) against the sealing layer (26, 46) of the laminate

8. Use of a blister pack (60) according to claim 7 for pharmaceutical products such as moisture-sensitive tablets and powders.

## Revendications

1. Stratifié déformable à froid (20, 40) formé à partir d'une feuille en aluminium (24, 44) doublée de matière plastique sur les deux côtés pour la réalisation de pièces de fond (50) d'emballages blister (60) pour des produits sensibles vis-à-vis de l'humidité, comprenant une feuille de polyamide (oPA) étirée de façon biaxiale et agencée sur un premier côté de la feuille en aluminium (24, 44), à titre de couche extérieure (22, 42), une feuille de polyamide (oPA) étirée de façon biaxiale et agencée sur le second côté de la feuille en aluminium (24, 44), à titre de couche intermédiaire (25, 45), et une couche de scellement (26, 46) formée d'une feuille en polychlorotrifluoroéthylène (PCTFE).

2. Stratifié déformable à froid (40) selon la revendication 1, **caractérisé en ce qu'**une feuille en polyamide (oPA) étirée de façon biaxiale est agencée entre la feuille en polyamide (oPA) étirée de façon biaxiale à titre de couche extérieure (42) et la feuille en aluminium (44), à titre de couche intermédiaire (43).

3. Stratifié déformable à froid (20, 40) selon la revendication 1 ou 2, **caractérisé en ce que** la feuille en aluminium (24, 44) a une épaisseur de 20 à 100 µm, de préférence de 30 à 60 µm.

4. Stratifié déformable à froid (20, 40) selon la revendication 1 ou 2, **caractérisé en ce que** les feuilles en polyamide (oPA) étirées de façon biaxiale ont une épaisseur de 10 à 40 µm, de préférence de 12 à 40 µm.

5. Stratifié déformable à froid (20, 40) selon l'une des revendications 1 à 4, **caractérisé en ce que** la feuille (26, 46) en polychlorotrifluoroéthylène (PCTFE) est étirée ou non étirée et présente une épaisseur de 10 à 120 µm, de préférence de 12 à 105 µm.

6. Partie de fond de blister (50), réalisée à partir d'un stratifié déformable à froid (20, 40) selon l'une des revendications 1 à 5.

7. Emballage blister (60) pour des produits sensibles vis-à-vis de l'humidité, comprenant une partie de fond de blister (50) réalisée à partir d'un stratifié déformable à froid (20, 40) selon l'une des revendications 1 à 5, et une feuille de recouvrement (70) appliquée sur la partie de fond de blister (50) contre la couche de scellement (26, 46) du stratifié, et contenant une feuille en aluminium.

8. Utilisation d'un emballage blister (60) selon la revendication 7 pour des produits pharmaceutiques tels que des comprimés et des poudres sensibles vis-à-vis de l'humidité.
